Europäisches Patentamt

(19) European Patent Office    (11) Publication number: **0 025 826**
Office européen des brevets    **B1**

(12)    **EUROPEAN PATENT SPECIFICATION**

(45) Date of publication of patent specification: **01.02.84**    (51) Int. Cl.³: **G 11 B 5/60,** G 11 B 5/48, G 11 B 21/16

(21) Application number: **80103961.1**

(22) Date of filing: **10.07.80**

(54) **Flying magnetic head/arm transducer assembly.**

(30) Priority: **06.09.79 US 73060**

(43) Date of publication of application:
**01.04.81 Bulletin 81/13**

(45) Publication of the grant of the patent:
**01.02.84 Bulletin 84/5**

(84) Designated Contracting States:
**DE FR GB IT**

(56) References cited:
**US - A - 2 937 240
US - A - 3 488 648
US - A - 3 599 193
US - A - 3 931 641
US - A - 3 936 881
US - A - 4 141 049**

(73) Proprietor: **International Business Machines
Corporation
Old Orchard Road
Armonk, N.Y. 10504 (US)**

(72) Inventor: **Root, Ronald Robert
1720-34th Street, N.W.
Rochester Minnesota 55901 (US)**
Inventor: **Warner, Michael Walter
2020 Magot Place
San Jose California 95125 (US)**
Inventor: **Watrous, Robert Bringhurst
7208 Golf Course Lane
San Jose California 95135 (US)**

(74) Representative: **Lewis, Alan John
IBM United Kingdom Patent Operations Hursley
Park
Winchester, Hants, S021 2JN (GB)**

## Flying magnetic head/arm transducer assembly

The invention relates to magnetic head assemblies that fly in noncontact transducing relation with moving magnetic media, and in particular to a head suspension used with a flying magnetic head.

In presently known disk files, magnetic head sliders fly in transducing relation adjacent to rotating disks. The head sliders are generally mounted to suspensions which are biased during the non-operation of the disk file to be unloaded, either in contact with an associated disk surface of spaced from the operative flying height position away from the disk surface. An example of a disk file magnetic head apparatus is disclosed in US Patent 4,141,049, and an example of a negative pressure head slider, is disclosed in US Patent 3,855,635.

The apparatus disclosed in US Patent No. 4,141,049 (Watrous) includes a flying magnetic read/write transducer assembly comprising a cantilevered support arm carrying the head at its free end. The arm is capable of resiliently flexing from a first position in which the head is disposed in an inoperative position to a second position in which the head is disposed in an operative position in transducing relationship with a magnetic medium (a disc) movable relative to the head. The Watrous assembly further comprises means, powered by the air flow created by relative movement between the head and the magnetic medium during use, for generating a force to urge the head away from its inoperative position towards its operative position.

The Watrous force-generating-means comprise a pressure guideway formed by a nozzle unit for collecting the air flow and directing it through a valved outlet to a passage which directs the air towards the head. The valve comprises an apertured shutter plate which is slid into and out of registry with the nozzle outlet to vary the air pressure supplied to the passage. Watrous describes other embodiments in which the valved outlet is omitted.

The Applicants have appreciated that, while Watrous discloses using the air flow to load the head towards the magnetic medium, very substantial improvements can be made in the way in which this is done.

It is therefore an object of the Applicants invention to provide an improved flying magnetic head assembly that is loaded towards a magnetic medium by air pressure. It is another object to maintain parallelism between the head and the medium during relative movement therebetween and to eliminate or reduce roll motion during head load and unload procedures. It is a further object to reduce friction and/or sticking of the head during relative movement of the head and medium towards and away from each other.

Accordingly the invention provides a flying head magnetic read/write transducer assembly comprising a cantilevered support arm carrying the head at its free end and capable of resiliently flexing from a first position in which the head is disposed in an inoperative position to a second position in which the head is disposed in an operative position in transducing relationship with a magnetic medium movable relative to the head, and means, powered by the air flow created by relative movement between the head and the magnetic medium during use, for generating a force to urge the head away from its inoperative position towards its operative position, said force-generating-means comprising means for collecting and deflecting the flowing air into a pressure guideway and being characterised by comprising a ram-plate connected to the support arm and working in the pressure guideway, said guideway having a wall upstanding around a first aperture through a first wall of a box-like structure and a second aperture through a second wall of the box-like structure, the arrangement being such that the flowing air enters the structure through the second aperture and exits through the first aperture against the ram plate and urges the ram-plate outwardly of the guideway so as to carry the head from its inoperative position to its operative position.

Preferably the support arm comprises a head support unit comprising two spaced parallel side members joined at their anchored end by a cross-member and a cantilevered coupling element extending from the cross-member into the space between the side members and secured to the ram-plate, said coupling element being capable of flexing from a neutral position in which it holds the ram-plate in a home position to accommodate movement of the ram-plate.

In an embodiment hereinbefore described a magnetic head slider is supported by a suspension that is formed with two legs having rigid portions and resilient spring portions. The resilient spring portions provide opposing and substantially equal deflections and coact to provide a balanced motion of the head suspension and slider, so that a parallel relationship is maintained between the slider surface and the recording surface of the medium, during loading and during the transducing mode while the head is flying.

To this end, the suspension is coupled to a box arm structure, having a slot through which air is directed onto the suspension and slider to load the head to the magnetic medium. The flying height of the slider is determined by the air pressure applied to the suspension, and additionally by the pressure generated at the slider-disk interface.

The invention will be described in greater detail with reference to the drawing in which:
Figure 1 is a side view of a disk file apparatus, partly broken away, illustrating the head arm and suspension assembly, made in accordance with this invention;

Figure 2 is a top plan view of a head arm suspension and slider, as employed in this invention;

Figure 3 is a bottom plan view of the head suspension and slider of this invention;

Figure 4 is an exploded view of the several parts of the head arm and suspension assembly; and

Figure 5 is a representational diagram illustrating the application of forces to the head suspension which produce the parallelism of the head slider as it moves to a disk surface.

Similar numerals refer to similar elements throughout the drawing.

Disclosure of the invention

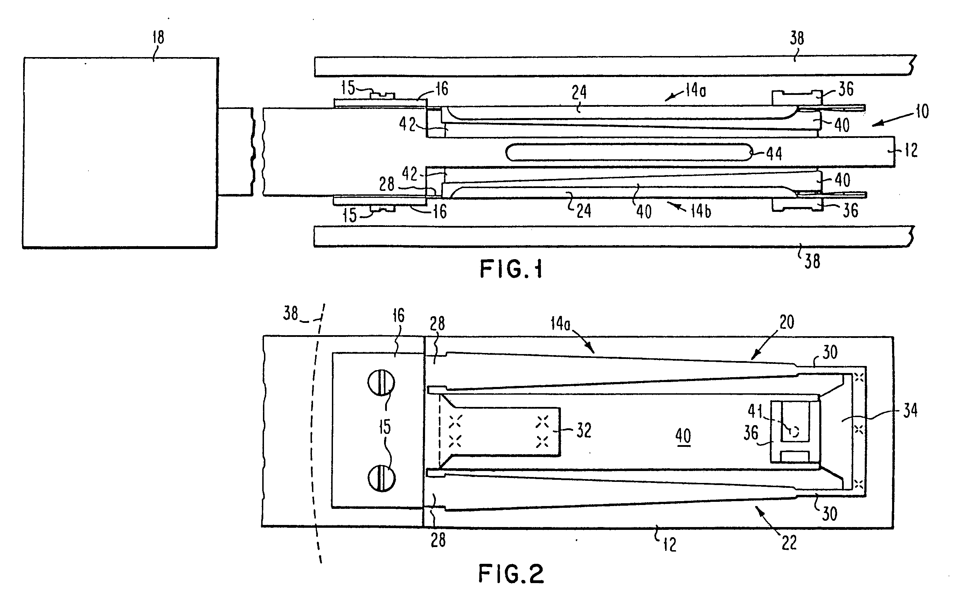

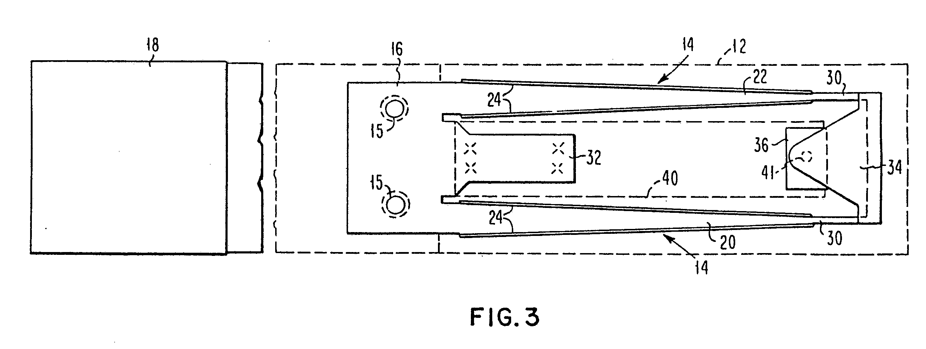

With reference to Figs. 1—4, an example of a disk file is shown wherein a head arm assembly 10 includes a box-like arm structure 12 and a pair of magnetic head suspensions 14a, 14b. Suspension 14b is a virtual mirror likeness of suspension 14a, and therefore the description which will be directed to the suspension 14a is also applicable to the suspension 14b.

The head suspensions 14 are attached by screws 15 to rigid mount elements 16. The head arm assembly 10 is joined to an actuator 18, which may be a voice coil motor, for example.

As depicted in Figs. 2, 3, and 4, the head suspension 14, which is rectangular in form, has two tapered legs 20 and 22. Each leg has flanged portions 24 along each side at the center of the leg. The legs 20 and 22, which are made preferably from thin stainless steel, thus have central rigid sections 26 bounded by flexible sections 28 and 30. The suspension 14 has a flexible tongue element 32, extending from a cross-section which joins the legs 20 and 22, and projecting inwardly of the suspension structure. At the other end of the suspension, a rigid triangular element 34 is welded to the tapered ends of both legs 20 and 22 to provide rigidity adjacent to the flexible sections 30.

A head slider 36 which supports a transducer is mounted to the triangular element 34 by epoxy or other attachment means. The slider is preferably of the type having a negative pressure configuration, such as disclosed in U.S. Patent 3,855,625.

When the disk is not rotating, the slider 36 and its transducer are out of contact and in a nontransducing relation with a magnetic disk 38. The opposing spring forces applied by the flexible sections 28 and 30 act to maintain the head and suspension in an unloaded condition, during which no active forces are applied to the head suspension.

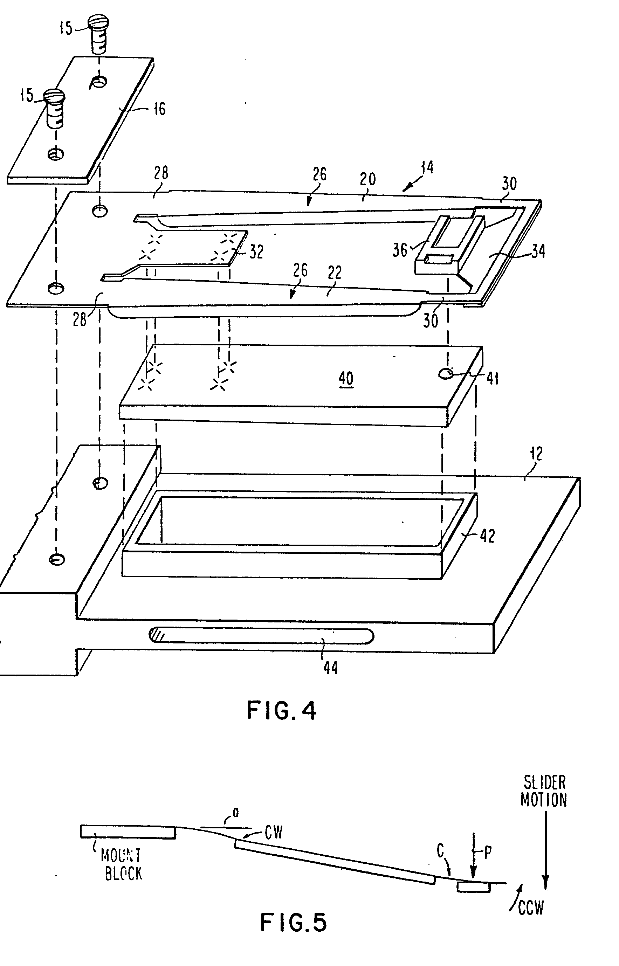

As illustrated in the exploded view of Fig. 4, the head suspension 14 is attached to a rectangular ram-plate or lid 40 by welding the tongue element 32 to the top and at one end of the lid 40. Displaced from the welded area and at the other end of the lid 40, a boss 41 is formed which is in contact with the triangular element 34. The movable lid seats in a close fit over a rectangular wall 42 projecting from the hollow arm structure 12. A slot 44 is formed in a side wall of the arm structure 12, for allowing air passage into the hollow interior of the arm box 12.

During operation of the disk drive, when the disks 38 are rotating, an air flow is generated by the disk rotation. The air passes through the slot 44 into the hollow interior of the arm structure 12 and out through the top opening of the wall structure 42. The air flow impinges on the lid 40 so that a load force is applied through the boss 41 to the triangular element 34. The load force is effectively applied to the center of the head slider 36, which is attached to the triangular element. The magnitude of the load force is a resultant of the rotational speed of the rotating disks and the amount of generated air flow which is applied to the lid 40. The amount of air flow and the resultant load force determine the spacing from the head to the disk.

When the disk drive is first turned on and the disks start rotating, the head slider 36 is urged towards the disk surface. In keeping with this invention, the flexible sections 28 and 30 provide clockwise and counterclockwise deflections to the head suspension 14, as illustrated in Fig. 5. These motions, which are determined partly by the configuration of the tapered legs 20 and 22, and their thicknesses and material, act to bring the head slider 36 to a close flying position in transducing relation with the rotating disk surface. It should be noted that the head slider 36 reaches this close flying position before the disks have attained their maximum rotational speed.

During the movement of the head slider towards the disk, the clockwise and counterclockwise motions applied to the head suspension 14 are substantially in balance, so that the head slider surface maintains a parallel relationship to the disk surface. Also, during the loading phase of the head slider to the disk, the slider pivots about the boss 41 to maintain a proper orientation relative to the disk surface, which has very minute topographical variations.

When the head slider is in close flying relation to the disk surface, the negative pressure forces developed by virtue of the slider configuration brings the slider to a desired precise spacing between the head and disk, as disclosed in the aforementioned U.S. patent 3,855,625.

In a preferred embodiment of this invention, the arm structure 12 is made of aluminum, the head suspensions and the lids 40 are made of $5.08 \times 10^{-5}$ meters (0.002 inch) thick stainless steel and the triangular element is made of $12.70 \times 10^{-5}$ meters (.005 inch) stainless steel.

There has been described herein a novel head arm assembly wherein two similar head suspensions are joined to a box-like arm structure. By virtue of balancing opposed load forces applied at the ends of each of the head suspensions, the head sliders attached to respective suspensions are loaded concurrently to associated disk surfaces in a parallel relationship. When flying adjacent to the disk surfaces, the parallelism of the head suspensions and head sliders is maintained relative to the disk surfaces, so that head crashes are avoided. Also, if the head approaches the disk in a parallel manner, when the force required to bring the head into air bearing position is reduced.

In a system of this type, since the heads are not in contact with the disk during start and stop, the problem of head sticking and friction between the heads and disks are virtually eliminated. The system allows the use of air flow generated by the rotating disks to develop a pressure differential that causes the heads to move from an unloaded to a loaded position. By coupling the pressure load to the head in a direction normal to the disk only, unwanted loads are decoupled and do not affect the head slider as it flies. In addition, the configuration disclosed herein has the substantial advantages that roll motion of the head is either eliminated or reduced to a neglible amount during movement of the head into and out of transducing relationship with the disc. Thus, a parallel relationship is maintained between the head and the discs. In addition the head is biased to a predetermined position relative to its mounting when it is out of transducing relationship with the disc.

## Claims

1. A flying head magnetic read/write transducer assembly comprising a cantilevered support arm (14) carrying the head (36) at its free end and capable of resiliently flexing from a first position in which the head is disposed in an inoperative position to a second position in which the head is disposed in an operative position in transducing relationship with a magnetic medium (38) movable relative to the head, and means, powered by the air flow created by relative movement between the head and the magnetic medium during use, for generating a force to urge the head away from its inoperative position towards its operative position, said force-generating-means comprising means for collecting and deflecting the flowing air into a pressure guideway (42) and being characterised by comprising a ram-plate (40) connected to the support arm and working in the pressure guideway (42), said guideway (42) having a wall upstanding around a first aperture through a first wall of a box-like structure (12) and a second aperture (44) through a second wall of the box-like structure, the arrangement being such that the flowing air enters the structure (12) through the second aperture (44) and exits through the first aperture against the ram plate and urges the ram-plate (40) outwardly of the guideway (42) so as to carry the head (36) from its inoperative position to its operative position.

2. A transducer assembly as claimed in claim 1, further characterised in that the support arm (14) comprises two spaced parallel side members (20, 22) joined at one end by a cross-member and a cantilevered coupling element (32) extending from the cross-member into the space between the side members (20, 22), said cross-member being attached to the box-like structure (12) and said coupling element (32) being secured to the ram-plate (40), said coupling element (32) being capable of flexing from a neutral position in which it holds the ram-plate (40) in a home position to accommodate movement of the ram-plate.

3. A transducer assembly as claimed in claim 2, further characterised in that each side member (20, 22) comprises a substantially inflexible central section (26) and resiliently flexible end sections (28, 30).

4. A transducer assembly as claimed in claim 2 or 3, further characterised in that each side member (20, 22) tapers over its length from said anchored end to said remote end.

5. A transducer assembly as claimed in claim 2, 3 or 4, further characterised in that the remote ends of the side members (20, 22) are joined by a second cross-member (34) on which the head (36) is mounted and in that, during movement of the head towards its operative position, the end sections (28) of the side arms (20, 22) are flexed in one sense and the remote end sections (30) of the side arms are flexed in the other, opposite sense.

6. A transducer assembly as claimed in claim 5, further characterised in that an abutment element (41) carried by the ram-plate (40) engages against the cross-member (34) during movement of the ram-plate.

7. A transducer assembly as claimed in claim 6, further characterised in that said abutment element is provided as a curved headed stud or boss (41) which acts as a pivotal connection for the arm (14).

8. A transducer assembly as claimed in anyone of claims 1 to 7, further characterised in that the head comprises a slider (36) having a negative-pressure generating air bearing surface operative in use to draw the head towards the magnetic medium and supplement the movement caused by the ram-plate.

9. A disc drive assembly comprising a plurality of spaced magnetic discs and a plurality of transducer assemblies each as claimed in anyone of claims 1 to 8.

## Patentansprüche

1. Lese/Schreibwandler mit fliegendem Magnetkopf, mit einem auskragenden Trägerarm (14), der den Magnetkopf (36) an seinem freien Ende trägt und sich federnd bewegen kann von einer ersten Position, in welcher sich der Magnetkopf im Stillstand befindet, in eine zweite Position, in welcher er sich in Arbeitsposition befindet, in Wandlerverbindung mit einem relativ zum Magnetkopf beweglichen magnetischen Medium (38), und mit von dem durch die Relativbewegung zwischen Kopf und magnetischem Medium entstehenden Luftstrom betriebenen Mitteln zur Bildung einer Kraft, mittels derer der Magnetkopf aus dem Stillstand in Betriebsposition gebracht wird, wobei diese kraftbildenden Mittel Vorrichtungen enthalten zum Einführen und Umleiten des Luftstromes in eine Druckführung (32), gekennzeichnet durch eine Auftreffplatte (40), die mit dem Trägerarm verbunden ist und in der Druckführung (42) arbeitet, wobei die Druckführung (42) eine Wand um eine erste Öffnung durch eine erste Wand einer kastenähnlichen Struktur (12) aufweist sowie eine zweite Öffnung (44) durch eine zweite Wand der kastenähnlichen Struktur, und wobei der Luftstrom durch die zweite Öffnung (44) in die Struktur (12) gelangt, diese durch die erste Öffnung verläßt, auf die Auftreffplatte auftrifft und diese (40) nach außen aus der Druckführung (42) hinausdrückt, so daß der Magnetkopf (36) aus dem Stillstand in Betriebsstellung gebracht wird.

2. Wandler nach Anspruch 1, dadurch gekennzeichnet, daß der Trägerarm (14) zwei voneinander beabstandete parallele Seitenelemente (20, 22) umfaßt, die an einem Ende durch ein Querelement und ein auskragendes Koppelelement (32) verbunden sind, welches vom Querelement in den Raum zwischen den Seitenelementen (20, 22) ragt, wobei das Querelement mit der kastenähnlichen Struktur (12) und das Koppelelement (32) mit der Auftreffplatte (40) verbunden ist, und wobei das Koppelelement (32) sich von einer neutralen, die Auftreffplatte (40) festhaltenden Position in eine Ruhestellung zur Bewegung der Auftreffplatte flexibel bewegen kann.

3. Wandler nach Anspruch 2, dadurch gekennzeichnet, daß jedes Seitenelement (20, 22) einen im wesentlichen unflexiblen Zentralabschnitt (26) sowie federnde Endabschnitte (28, 30) aufweist.

4. Wandler nach Anspruch 2 oder 3, dadurch gekennzeichnet, daß sich jedes Seitenelement (20, 22) über seine gesamte Länge vom verankerten zum entgegengesetzten Ende zuspitzt.

5. Wandler gemäß den Ansprüchen 2, 3 oder 4, dadurch gekennzeichnet, daß die abgelegenen Enden der Seitenelemente (20, 22) durch ein weiteres Querelement (34) verbunden werden, auf welchem der Magnetkopf (36) vorgesehen ist, und daß während der Bewegung des Magnetkopfes in seine Betriebsposition die Endabschnitte (28) der Seitenarme (20, 22) in eine Richtung bewegt werden, und die abgelegenen Endabschnitte (30) der Seitenarme in die entgegengesetzte Richtung bewegt werden.

6. Wandler nach Anspruch 5, dadurch gekennzeichnet, daß ein Gegenlagerelement (41) auf der Auftreffplatte (40) in das Querelement (34) während der Bewegung der Auftreffplatte (40) eingreift.

7. Wandler nach Anspruch 6, dadurch gekennzeichnet, daß dieses Gegenlagerelement ein gebogener Bolzen oder Stutzen (41) ist, der als Schwenkgelenk für den Arm (14) vorgesehen ist.

8. Wandler nach einem der Ansprüche 1 bis 7, dadurch gekennzeichnet, daß der Magnetkopf ein Schiebeelement (36) mit einer Unterdruck bildenden Luftlagerfläche enthält, mittels derer der Magnetkopf zum magnetischen Medium gezogen wird, um die Bewegung der Auftreffplatte zu ergänzen.

9. Plattenantrieb mit einer Mehrzahl von beabstandeten Magnetplatten und einer Mehrzahl von Wandlern nach einem der Ansprüche 1 bis 8.

**Revendications**

1. Ensemble de transduction à tête magnétique flottante de lecture/écriture comportant un bras en porte-à-faux (14) portant la tête (36) à son extrémité libre et pouvant se déformer élastiquement en passant d'une première position dans laquelle la tête est inactive à une seconde position dans laquelle la tête est dans une position active en relation de transduction avec un milieu magnétique (38) qui se déplace par rapport à la tête, et des moyens, actionnés par l'écoulement d'air résultant du mouvement relatif entre la tête et le milieu magnétique en cours d'utilisation, qui engendrent une force susceptible d'éloigner la tête de sa position inactive et de la rapprocher de sa position active, lesdits moyens comportant des moyens pour recueillir l'écoulement d'air et diriger l'air vers un passage (42) et caractérisé en ce qu'il comporte une plaque mobile (40) reliée au bras et travaillant dans le passage (42), lequel possède une paroi verticale entourant une première ouverture pratiquée dans une première paroi d'un élément en forme de boîte (12), une seconde ouverture (44) étant pratiquée dans une seconde paroi dudit élément, de telle sorte que l'air pénètre dans l'élément (12) par la seconde ouverture (44) et en sorte par la première ouverture en sollicitant la plaque mobile (40) vers l'extérieur du passage (42) afin de faire passer la tête (36) de sa position inactive à sa position active.

2. Ensemble de transduction selon la revendication 1, caractérisé en outre en ce que le bras (14) comporte deux éléments latéraux parallèles (20, 22) séparés l'un de l'autre et réunis à une de leurs extrémités par un élément de pontage et un élément de couplage en porte-à-faux (32) qui s'étend, depuis l'élément de pontage dans l'espace existant entre les éléments latéraux (20, 22), ledit élément de pontage étant fixé à l'élément (12) et ledit élément de couplage (32) étant fixé à la plaque mobile (40), ledit élément de couplage (32) pouvant fléchir depuis une position neutre dans laquelle il maintient la plaque mobile (40) dans une position de repos de façon à lui permettre de se déplacer.

3. Ensemble de transduction selon la revendication 2, caractérisé en outre en ce que chaque élément latéral (20, 22) comporte une partie centrale (26) pratiquement rigide et des extrémités pouvant se déformer élastiquement (28, 30).

4. Ensemble de transduction selon la revendication 2 ou 3, caractérisé en outre en ce que la largeur de chaque élément latéral (20, 22) diminue graduellement de son extrémité fixe vers son extrémité libre.

5. Ensemble de transduction selon la revendication 2, 3 ou 4, caractérisé en outre en ce que les extrémités libres des éléments latéraux (20, 22) sont réunies par un second élément de pontage (34) sur lequel la tête (36) est montée, et en ce que, lors du déplacement de la tête vers sa position active, les extrémités (28) des bras latéraux (20, 22) fléchissent dans un sens et leurs extrémités opposées (30) dans le sens opposé.

6. Ensemble de transduction selon la revendication 5, caractérisé en outre en ce qu'un élément de butée (41) que comporte la plaque mobile (40) vient porter contre l'élément de pontage (34) lors du déplacement de celle-ci.

7. Ensemble de transduction selon la revendication 6, caractérisé en outre en ce que le dit élément de butée se présente sous la forme d'un bossage (41) servant de pivot pour le bras (14).

8. Ensemble de transduction selon l'une quelconque des revendications 1 à 7, caractérisé en outre en ce la tête comporte un patin (36) possédant une surface qui engendre une dépression permettant d'attirer la tête vers le milieu magnétique et d'aider le mouvement créé par la plaque mobile.

9. Unité d'entrainement de disques comportant plusieurs disques magnétiques et plusieurs ensembles de transduction dont chacun est conforme à l'une quelconque des revendications 1 à 6.

FIG.1

FIG.2

FIG.3

FIG.4

FIG.5